# EUROPEAN PATENT SPECIFICATION

(11) **EP 2 045 613 B1**
(45) Date of publication and mention of the grant of the patent: **09.11.2011**
(21) Application number: 08016793.5
(22) Date of filing: 24.09.2008
(51) Int. Cl.: G01S 5/02

(54) **Computing geographical location of a mobile receiver using network measurement reports**
Berechnung des geographischen Standorts eines mobilen Empfängers unter Verwendung von Netzwerkmessberichten
Localisation géographique informatique d'un récepteur mobile utilisant des rapports de mesure de réseau

(30) Priority: 01.10.2007 US 865414
(43) Date of publication of application: 08.04.2009
(73) Proprietor: Broadcom Corporation, Irvine, CA 92617 (US)
(72) Inventor: LaMance, James, Irvine, CA 92617 (US); Lundgren, David, 94941 Mill Valley (US)
(74) Representative: Jehle, Volker Armin

(56) References cited:
- US-A1- 2003 098 811
- US-A1- 2004 259 575
- US-A1- 2005 285 793
- BARTON R R ET AL: "Modifications of the Nelder-Mead simplex method for stochastic simulation response optimization" SIMULATION CONFERENCE, 1991. PROCEEDINGS., WINTER PHOENIX, AZ, USA 8-11 DEC. 1991, NEW YORK, NY, USA,IEEE, US, 8 December 1991 (1991-12-08), pages 945-953, XP010052816 ISBN: 978-0-7803-0181-8

## Description

### BACKGROUND OF THE INVENTION

### Field of the Invention

The present invention generally relates to mobile cellular receivers and, more particularly, to a method and system for computing a geographical location of the mobile receiver using at least one network measurement report.

### Description of the Related Art

A number of different types of location-based service applications have been developed or proposed for wireless telecommunications networks, i.e., communications networks involving at least one wireless interface between communicating devices. Generally, such applications determine or otherwise obtain location information regarding the location of a mobile receiver under consideration, e.g., a wireless telephone, PDA, wireless data terminal or the like, and provide service information based on the mobile receiver location. Examples of location-based service applications include E911, local service information and location-based billing applications. In E911 applications, emergency calls are routed to a selected dispatcher based on the location of origin of an emergency call. Additionally, location information may be transmitted to the dispatcher or another location to assist in the emergency response. Location-based service applications provide information regarding local services such as hotels or restaurants based on a request entered via a mobile receiver. In location-based billing applications, a rate for a call placed or received by a wireless telephone is dependent on the location of the phone, e.g., whether the phone is inside or outside of a "home zone" for the subscriber proximate to the subscriber's residence, business or other defined location. Various other applications have been proposed or implemented.

Location-based service applications generally involve comparing a current (or recent) location to a location of interest, e.g., a point identified by geographical coordinates, a boundary, or a predefined service zone definition, to make a binary determination (e.g., that the mobile receiver is either inside or outside of a zone under consideration), a matching determination (e.g., that the mobile receiver location matches or overlaps one or more stored zone definitions), or a proximity determination (e.g., to identify the closest service provider(s)). In any case, at one or more relevant processing steps, mobile receiver location information corresponding to a particular time is compared to service location information corresponding to one or more service zones, service provider locations or other stored location information. Thus, in E911 applications the mobile receiver location at the time of placing an E911 call may be compared to the dispatcher coverage zones of an emergency response network. In local service information applications, the location of a mobile receiver at the time of submitting, for example, a local hotel information request, may be compared to a database of hotel location information. The location of a mobile receiver during a call may be used by a location-based billing application to establish billing parameters for the call.

In addition, location-based service applications generally provide service information in response to an input by a subscriber or other application user invoking the application. In the case of local service information applications, the input is generally an explicit service request entered via the mobile receiver. In E911 or location-based billing applications, the location-based service application may be invoked invisibly, from the perspective of the mobile receiver, upon making a call. In other cases, the input invoking the application to provide service information based on the location of the mobile receiver is received from a separate application. In such applications, the service information is nonetheless provided in response to an input requesting location-based services. That is, the trigger event generally is, from the perspective of the service application, a service request.

In some cases today, multiple sources of location information are available. For example, within certain areas of existing networks, a network-based Location Determination Technology (LDT), such as, for example, Position Determination Equipment (PDE) or a Serving Mobile Location Center (SMLC), is available to locate mobile receivers. Such network-based equipment often utilize a multilateration technology, such as time difference of arrival of a signal from the mobile receiver or an angle of arrival to locate a unit based on signals transmitted between the mobile receiver and multiple equipment sites having known locations, such as cell stations. Some mobile receivers are equipped with Global Positioning System (GPS) receivers that can determine the position of the unit based on signals from satellites of the GPS constellation. However, the accuracy of the GPS location determination can degrade in urban areas, that is, areas with multiple buildings and structures that interfere with the signal path between the GPS satellites and the mobile receiver.

Alternately, location information may be available from the network itself, e.g., information that is used to route calls, manage cell-to-cell handoff or otherwise operate the network. For example, such information may include a cell station, cell sector or other network subdivision identifier ("Cell ID") or handoff information residing in the network for the purposes of handoff management such as Network Measurement Report (NMR) and Mobile Assisted Hand-Off (MAHO) information. Specifically, the NMR is generated by software in the mobile receiver from data collected by the receiver measuring signals received from a base cell station and neighboring cell stations to generate a Received Signal Strength Indicator (RSSI) for each station. Each RSSI is coupled to the Cell ID for each station to create the NMR, which is transmitted to the network using the measurement reporting scheme specified in the system. Based on the NMR, the network can determine the location of a specific mobile receiver. However, the accuracy of the NMR-based location can be limited.

Therefore, there is a need in the art for a method and system for determining the location of a mobile receiver with increased accuracy.

Nikolai et al. (US 2003/098811 A1) discloses a method of estimating the position of a mobile station in a mobile radio network on the basis of propagation models. At the mobile station, the field strength of a plurality of base stations connected to the mobile station is measured, and the distance between the mobile station and each of the base stations connected to the mobile station is estimated on the basis of a propagation model.

Sugar et al. (US 2005/285793 A1) discloses a device and method for estimating a position of a target device based on data pertaining to strength of an emission received from the target device. At a mobile device, emissions are received from the target device when the mobile device is at each of a plurality of positions to produce receive signal strength data representative thereof. In addition, at the mobile device, signals are received from each of a plurality of reference devices at a corresponding known position (and transmitted with known transmit powers) when the mobile device is at each of said plurality of positions to produce receive signal strength data representative thereof. The position of the target device is estimated based on receive signal strength data associated with received emissions from the target device and receive signal strength data associated with received signals from the reference devices.

### SUMMARY OF THE INVENTION

Embodiments of the present invention comprise a method and apparatus for determining a location of a mobile receiver.

The locations of the mobile receiver may be provided to a location server via a telecommunications network.
According to the invention, there are provided a method for determining a location of a mobile receiver as defined by independent claim 1, and a system for determining a location of a mobile receiver as defined by independent claim 6. Further advantageous features of the invention are defined by the dependent claims.Advantageously, the plurality of signal path modeling parameters comprises at least a location for each cellular station, a cellular station antenna height, a cellular station antenna direction, an effective radiated power of each cellular station, and a frequency for each cellular station, antenna sector data, antenna gain pattern modeling, relative height-above-ground difference between the mobile receiver and a transmitter located at each cellular station, urban path loss parameters, path terrain model parameters including terrain data and environmental features associated with each cellular station, urban structural features associated with each cellular station, and antenna beamwidth.
Advantageously, the non-linear estimation algorithm is a Downhill Simplex algorithm.
Advantageously, the step of computing the location further comprises applying a triangulation algorithm to the plurality of distances between the mobile receiver and each of the plurality of cellular stations.
Advantageously, the mobile receiver is a mobile cellular phone.
Advantageously, the method further comprises obtaining the plurality of signal strengths and the plurality of cellular station identifiers from a network measurement report.
Advantageously, the method further comprises obtaining the network measurement report from the mobile receiver.
Advantageously, the method further comprises receiving the network measurement report through a communications network.
Advantageously, the method further comprises obtaining multiple pluralities of signal strengths over a period of time.
Advantageously, the method further comprises computing a first improved geographical position.
Advantageously, the method further comprises obtaining geographical location data from a global positioning system, wherein the geographical location data is associated with the mobile receiver and a plurality of global positioning satellites.
Advantageously, the method further comprises combining the geographical location data with the computed geographical location to produce a second improved geographical location.
Advantageously, the method further comprises transmitting the location to the mobile receiver.
Advantageously, the method further comprises transmitting the location to a third party.
Advantageously, the method further comprises:
performing the multiple applications of the non-linear estimation algorithm;
discarding at least one outlier computed distance; and
computing a third improved geographical location of the mobile receiver.
Advantageously, the mobile receiver is a mobile cellular phone.
Advantageously, the first software application combines the plurality of signal strengths and the plurality of cellular station identifiers to create a network measurement report.
Advantageously, the network is a wireless telecommunications network.
Advantageously, the mobile device comprises a global positioning system component capable of providing location information for the mobile device.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 depicts a system for computing a location of a mobile receiver, in accordance with an embodiment of the present invention;

Figure 2 presents a method for computing a location of a mobile receiver in accordance with an embodiment of the present invention; and

Figure 3 presents a method for processing a network measurement report to compute a location of a mobile receiver, in accordance with one embodiment of the present invention;

### DETAILED DESCRIPTION

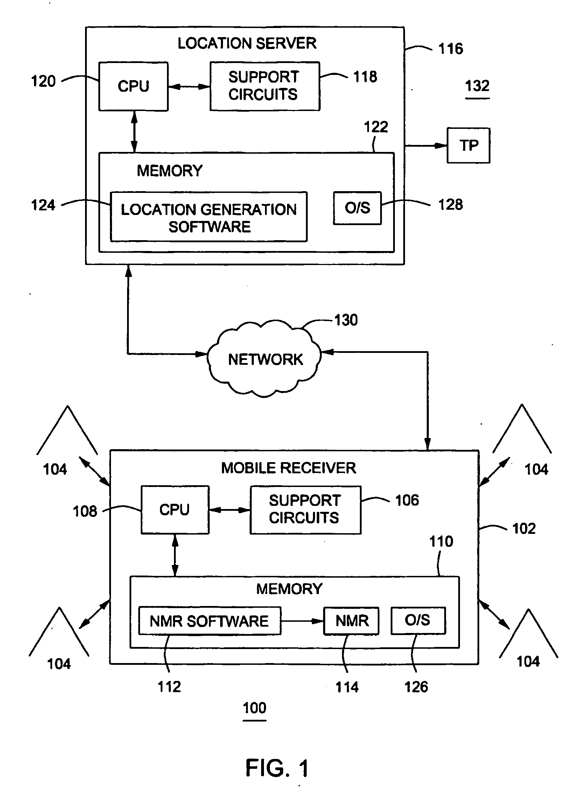

Figure 1 depicts a system comprising a mobile receiver 102 and at least one location server 116. The mobile receiver 102 comprises a central processing unit (CPU) 108, support circuits 106, and a memory 110. The location server 116 comprises a CPU 120, support circuits 118, and a memory 122. The CPU 108, 120 may comprise one or more conventionally available microprocessors. The support circuits 106, 118 are well known circuits that comprise power supplies, clocks, input/output interface circuitry, and the like. The mobile receiver 102 may include any device that is capable of communicating with a wireless network, such as, for example, a mobile cellular telephone, a handset, a personal digital assistant (PDA), a portable, laptop, notebook, or other computer; a pager, or a telematics device.

Memory 110, 122 may comprise random access memory, read only memory, removable disk memory, flash memory, and various combinations of these types of memory. The memory 110, 122 is sometimes referred to as main memory and may in part be used as cache memory or buffer memory. The memory 110, 122 stores various software packages and components, such as an operating system (O/S) 126, 128. Although Figure 1 depicts one location server 116 in system 100, other embodiments of the present invention include systems with multiple location servers.

Memory 110 of the mobile receiver 102 may comprise a software application 112 with functionality for generating at least one Network Measurement Report (NMR) 114, which may be stored internally in memory 110. In an alternate embodiment, the NMR 114 is stored in a database (not shown), external to the mobile receiver 102. The NMR is generated from information and data received from the cellular stations 104, via wireless communications.

The mobile receiver 110 then transmits the NMR 114 to the location server 116 via a communications network 130, preferably a telecommunications network. Alternately, the communications network 130 may be any conventional network, such as an Ethernet network, a fiber channel network, or a wide area network (WAN) that provides either a direct or indirect (e.g., Internet via a wired or wireless connection, or public switched telephone network (PSTN)) connection.

Memory 122 of the location server 116 comprises a software application 124 for generating location data associated with the mobile receiver 102 using the received NMR 114. The location server 116 may then transmit the location data to the mobile receiver 102 through the network 130. In another embodiment of the present invention, the location server 116 may transmit the location data to a third party (TP) 132 upon request.

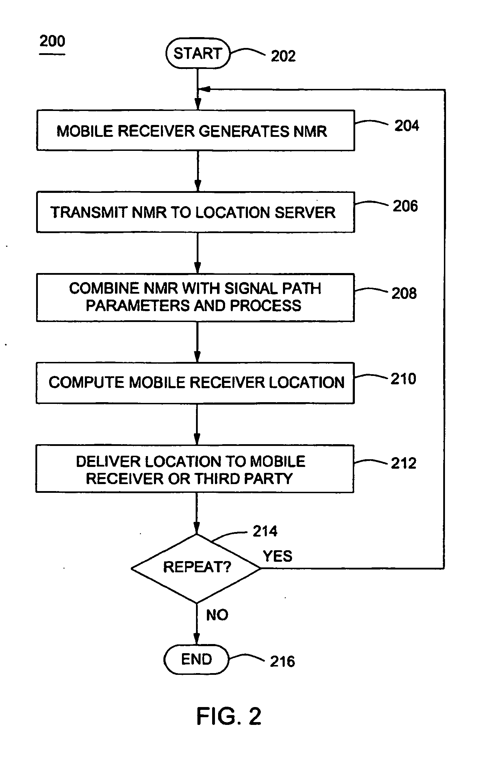

Figure 2 provides a method for computing the location of a mobile receiver, according to an embodiment of the present invention. The steps need not be in the sequence illustrated, and some of the steps may be essentially simultaneous. Method 200 begins at step 202 and continues with a mobile receiver, such as mobile cellular phone, generating an NMR based on a plurality of cellular stations, at step 204. The NMR may comprise information associated with each cellular station, such as a unique station identifier and a received signal strength indicator (RSSI) associated with each cellular station. The NMR may be generated by a software application located in the mobile receiver.

At step 206, the mobile receiver transmits the NMR to at least one location server over a communications network. At step 208, the location server receives the NMR and combines the NMR with a plurality of signal path modeling parameters associated with the mobile receiver and with the plurality of cellular stations. The location server then processes the NMR to compute a geographical location of the mobile receiver, at step 210.

The location server delivers the computed location to the mobile receiver for use by a user, or perhaps to some other third party, at step 212. The mobile receiver then determines whether the method should be repeated, at step 214. The method may be repeated, for example, if the mobile receiver is moving and not stationary, such that periodic location computations would be of use to a moving user. If the method is to be repeated, the method restarts at step 204. If the method is not to be repeated, the process ends at step 216.

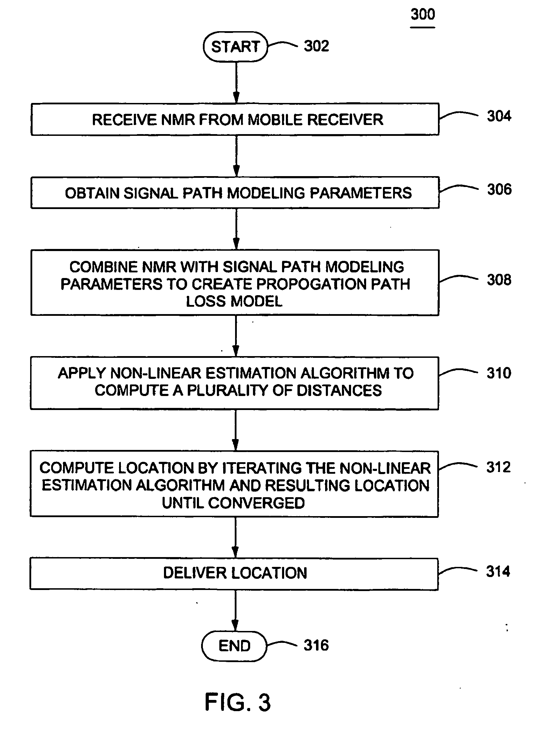

In Figure 3, the processing of a NMR to compute a location of a mobile receiver is described further. The method 300 starts at step 302 and continues to the location server obtaining an NMR at any given time from a mobile receiver. As previously stated, the NMR comprises information regarding a plurality of cellular stations within a certain geographical region of the mobile receiver's location. Such information includes a cellular station identifier and a RSSI for each cellular station. A software application maintained by the location server receives the NMR in order to compute the location of the mobile receiver. The RSSI is a received signal strength value generated from the power strength of the signal measured between the transmit signal power (P_{T}) from the mobile receiver to the cellular station, and the return signal power (P_{R}) to the mobile receiver from the cellular station. Based on the RSSI, a distance between the mobile receiver and the cellular station may be computed and incorporated into computing a location of the mobile receiver.

However, to compute an accurate location and to take into account environmental conditions of the mobile receiver's location, such as, for example, topographical features, urban features, such as man-made structures and city layouts, etc., at step 306, the location server obtains other cellular station data, such as, a location for each cellular station, man-made structures and topographical features surrounding the location of each cellular station, a cellular station antenna height, a cellular station antenna direction, an effective radiated power of each cellular station, and a frequency for each cellular station, antenna sector data, antenna gain pattern modeling, relative height-above-ground difference between the mobile receiver and a transmitter located at each cellular station, and antenna beamwidth. Such data may be previously provided to the location server by an external source, such as the location of the cellular station, and antenna information associated with the cellular station, while other data, such as the relative height above ground distance between the mobile receiver and the cellular station transmitter, is obtained contemporaneously with the NMR. Such data is labeled "signal path modeling parameters," as the location server uses such parameters to map out the signal path between the mobile receiver and a specific cellular station. In one embodiment of the present invention, the signal path modeling parameters further comprise parameters associated with an urban path loss model, such as, for example, urban structural features associated with each cellular station. In another embodiment, the signal path modeling parameters further comprise parameters associated with a path terrain model, such as, for example, terrain data and environmental features surrounding each cellular station.

At step 308, the location server application combines the NMR data and the signal path modeling parameters to create a propagation path loss model. The path loss model is generated to substantially mimic the signal path traveled between the mobile receiver and a specific cellular station.

The location server application then applies a non-linear estimation algorithm to the path loss model to compute a distance associated with a specific cellular station in relation to the mobile receiver, at step 310. As information associated with multiple cellular stations is included in the NMR, the location server application computes a plurality of distances, wherein each distance is related to each cellular station. In an embodiment of the present invention, the location server application applies the Downhill Simplex algorithm to the path loss model to compute a location of the mobile receiver.

At step 312, the location server application computes a location of the mobile receiver using the plurality of distances computed in step 310 by iterating the non-linear estimation algorithm and resulting mobile receiver location until converged. The non-linear estimation algorithm is employed because the geometry and non-linear characteristics of the range models may cause certain GPS iterative positioning techniques to operate inadequately. During the application of the non-linear estimation algorithm, the receiver position is moved to find the location that minimizes the effects of variances in the ranges derived from the models. Hence, iteration of the non-linear estimation algorithm results in convergence of the ranges. In one embodiment of the present invention, the location of the mobile receiver is computed by applying a triangulation algorithm to the plurality of distances if there is an equal number of observations and variables.

At step 314, the location server may deliver the computed location to the mobile receiver or an outside third party, via a communications network, such as a wireless telecommunications network. The method then ends at step 316. Test examples applying method 300 produced a geographic location for a mobile receiver with an accuracy of about 91 percent within a 150-meter radius of the mobile receiver, and an accuracy of about 100 percent within a 300-meter radius of the mobile receiver.

In yet another embodiment of the present invention, the method further comprises obtaining multiple NMRs, including multiple RSSIs associated with a group of cellular stations over a period of time, to provide information for computing the location of a mobile receiver as it is continuously moving, for example, if a user is driving and desires to obtain his/her location using his/her mobile cellular phone.

Another embodiment of the present invention provides a method for computing a location of a mobile receiver further comprising the step of obtaining geographical location data from a global positioning system (GPS) associated with the mobile receiver, and combining the GPS position data with the computed plurality of distances to produce an improved location for the mobile receiver.

Another embodiment of the present invention provides a method for computing a location of a mobile receiver further comprising repeating the application of the non-linear estimation algorithm to a set of signal path modeling parameters, discarding at least one outlier computed distance, and computing a location of the mobile receiver without the at least one outlier distance to produce an improved location.

While the foregoing is directed to embodiments of the present invention, other and further embodiments of the invention may be devised without departing from the basic scope thereof, and the scope thereof is determined by the claims that follow.

## Claims

1. A method for determining a location of a mobile receiver, the method comprising:
measuring a plurality of signal strengths received by a mobile receiver (102), wherein the plurality of signal strengths are associated with a plurality of cellular stations (104), wherein the plurality of signal strengths is associated with a specific point in time;
combining the plurality of signal strengths with a plurality of signal path modeling parameters to create a propagation path loss model of the path between the plurality of cellular stations (104) and the mobile receiver (102);
applying a non-linear estimation algorithm to the propagation path loss model;
generating a plurality of distances, wherein each distance is associated with the mobile receiver (102) and each of the plurality of cellular stations (104); and
computing the location of the mobile receiver (102) by iterating the non-linear estimation algorithm and resulting mobile receiver position until converged, the iteration performed by moving the resulting mobile receiver position until the location of the mobile receiver (102) is found which minimizes effects of variances in the plurality of distances derived from the propogation path loss model.

2. The method of Claim 1, wherein the plurality of signal path modeling parameters comprises at least a location for each cellular station, a cellular station antenna height, a cellular station antenna direction, an effective radiated power of each cellular station, and a frequency for each cellular station, antenna sector data, antenna gain pattern modeling, relative height-above-ground difference between the mobile receiver (102) and a transmitter located at each cellular station, urban path loss parameters, path terrain model parameters including terrain data and environmental features associated with each cellular station, urban structural features associated with each cellular station, and antenna beamwidth.

3. The method of Claim 1, wherein the non-linear estimation algorithm is a Downhill Simplex algorithm.

4. The method of Claim 1, wherein the step of computing the location further comprises applying a triangulation algorithm to the plurality of distances between the mobile receiver (102) and each of the plurality of cellular stations (104).

5. The method of Claim 1, wherein the mobile receiver (102) is a mobile cellular phone.

6. A system for determining a location of a mobile receiver, the system comprising:
a plurality of cellular stations (104);
a mobile receiver (102) for determining a plurality of signal strengths associated with the plurality of cellular stations, wherein the plurality of signal strengths are associated with a specific point in time;
a location server (116) for computing a plurality of signal path modeling parameters related to the mobile receiver combining the plurality of signal strengths with the plurality of signal path modeling parameters to create a propagation path loss model, applying a non-linear estimation algorithm to the propagation path loss model, generating a plurality of distances, wherein each distance is associated with the mobile receiver and each of the plurality of cellular stations; and computing the location of the mobile receiver by iterating the non-linear algorithm and the location computation, the iteration performed by moving the location of the mobile receiver until the location of the mobile receiver is found which minimizes effects of variances in the plurality of distances derived from the propogation path loss model; and
a network (130) for communications between the mobile receiver and the location server.

7. The system of Claim 6, wherein the mobile receiver (102) is a mobile cellular phone.

8. The system of Claim 6, wherein the first software application combines the plurality of signal strengths and the plurality of cellular station identifiers to create a network measurement report.

9. The system of Claim 6, wherein the network (130) is a wireless telecommunications network.

## Patentansprüche

1. Verfahren zum Ermitteln des Standorts eines mobilen Empfängers, wobei das Verfahren umfasst:
Messen einer Vielzahl von Signalstärken, die von einem mobilen Empfänger (102) empfangen werden, wobei die Vielzahl von Signalstärken mit einer Vielzahl von Mobilfunkstationen (104) assoziiert ist, wobei die Vielzahl von Signalstärken mit einem bestimmten Zeitpunkt assoziiert ist;
Kombinieren der Vielzahl von Signalstärken mit einer Vielzahl von Signalpfadmodellierungsparametern, um ein Strahlenwegverlust-Modell des Pfads zwischen der Vielzahl von Mobilfunkstationen (104) und dem mobilen Empfänger (102) zu erzeugen;
Anwenden eines nicht linearen Schätzalgorithmus auf das Strah lenwegverl ust-Modell;
Erzeugen einer Vielzahl von Entfernungen, wobei jede Entfernung mit dem mobilen Empfänger (102) und jeder der Vielzahl von Mobilfunkstationen (104) assoziiert ist; und
Berechnen des Standorts des mobilen Empfängers (102) durch Wiederholen des nicht linearen Schätzalgorithmus und der resultierenden Position des mobilen Empfängers, bis sie konvergieren, wobei die Wiederholung durchgeführt wird durch Bewegen der resultierenden Position des mobilen Empfängers, bis der Standort des mobilen Empfängers (102) gefunden ist, der Abweichungseffekte in der Vielzahl von Entfernungen, die von dem Strahlenwegverlust-Modell abgeleitet wurden, minimiert.

2. Verfahren nach Anspruch 1, wobei die Vielzahl von Signalpfadmodellierungsparametern wenigstens einen Standort für jede Mobilfunkstation, ein Mobilfunkstation-Antennenhöhe, eine Mobilfunkstation-Antennenrichtung, eine effektive Strahlungsleistung jeder Mobilfunkstation und eine Frequenz für jede Mobilfunkstation, Antennenabschnittsdaten, Antennenverstärkungscharakteristik-Modellierung, relative Höhe-über-Boden-Differenz zwischen dem mobilen Empfänger (102) und einem an jeder Mobilfunkstation befindlichen Sender, Stadtpfadverlust-Parameter, Geländepfadmodell-Parameter einschließlich Geländedaten und Umweltmerkmalen, die mit jeder Mobilfunkstation assoziiert sind, Stadtstrukturmerkmale, die mit jeder Mobilfunkstation assoziiert sind, und Antennenstrahlweite umfasst.

3. Verfahren nach Anspruch 1, wobei der nicht lineare Schätzalgorithmus ein Downhill Simplex Algorithmus ist.

4. Verfahren nach Anspruch 1, wobei der Schritt des Berechnens des Standorts des Weiteren das Anwenden eines Triangulationsalgorithmus auf die Vielzahl von Entfernungen zwischen dem mobilen Empfänger (102) und jeder der Vielzahl von Mobilfunkstationen (104) umfasst.

5. Verfahren nach Anspruch 1, wobei der mobile Empfänger (102) ein Mobilfunktelefon ist.

6. System zum Ermitteln des Standorts eines mobilen Empfängers, wobei das System aufweist:
eine Vielzahl von Mobilfunkstationen (104);
einen mobilen Empfänger (102) zum Ermitteln einer Vielzahl von Signalstärken, die der Vielzahl von Mobilfunkstationen (104) assoziiert ist, wobei die Vielzahl von Signalstärken mit einem bestimmten Zeitpunkt assoziiert ist;
einen Standort-Server (116) zum Berechnen einer Vielzahl von Signalpfadmodellierungsparametern, die sich auf den mobilen Empfänger beziehen, zum Kombinieren der Vielzahl von Signalstärken mit der Vielzahl von Signalpfadmodellierungsparametern, um ein Strahlenwegverlust-Modell zu erzeugen, zum Anwenden eines nicht linearen Schätzalgorithmus auf das Strahlenwegverlust-Modell, zum Erzeugen einer Vielzahl von Entfernungen, wobei jede Entfernung mit dem mobilen Empfänger und jeder der Vielzahl von Mobilfunkstationen assoziiert ist; und zum Berechnen des Standorts des mobilen Empfängers durch Wiederholen des nicht linearen Algorithmus und der Standortberechnung, wobei die Wiederholung durchgeführt wird durch Bewegen des Standorts des mobilen Empfängers, bis der Standort des mobilen Empfängers gefunden ist, der Abweichungseffekte in der Vielzahl von Entfernungen, die von dem Strahlenwegverlust-Modell abgeleitet wurden, minimiert; und
ein Netzwerk (130) für Kommunikationen zwischen dem mobilen Empfänger und dem Standort-Server.

7. System nach Anspruch 6, wobei der mobile Empfänger (102) ein Mobilfunktelefon ist.

8. System nach Anspruch 6, wobei die erste Software-Anwendung die Vielzahl von Signalstärken und die Vielzahl von Mobilfunkstations-Identifizierern kombiniert, um einen Netzwerkmessbericht zu erzeugen.

9. System nach Anspruch 6, wobei das Netzwerk (130) ein drahtloses Telekommunikationsnetzwerk ist.

## Revendications

1. Procédé de détermination d'une localisation d'un récepteur mobile, le procédé comprenant :
la mesure d'une pluralité de forces de signaux reçues par un récepteur mobile (102), dans lequel la pluralité de forces de signaux sont associées avec une pluralité de stations cellulaires (104), dans lequel la pluralité de forces de signaux est associée avec un point spécifique dans le temps ;
la combinaison de la pluralité de forces de signaux avec une pluralité de paramètres de modélisation de voies de signaux pour créer un modèle de perte de voie de propagation de la voie entre la pluralité de stations cellulaires (104) et le récepteur mobile (102) ;
l'application d'un algorithme d'estimation non linéaire au modèle de perte de voie de propagation ;
la génération d'une pluralité de distances, dans lequel chaque distance est associée avec le récepteur mobile (102) et chacune de la pluralité de stations cellulaires (104) ; et
le calcul de la localisation du récepteur mobile (102) par itération de l'algorithme d'estimation non linéaire et de la position résultante du récepteur mobile jusqu'à convergence, l'itération effectuée en déplaçant la position résultante du récepteur mobile jusqu'à ce que la localisation du récepteur mobile (102) soit trouvée, qui minimise des effets de variances dans la pluralité de distances dérivées du modèle de perte de voie de propagation.

2. Procédé selon la revendication 1, dans lequel la pluralité de paramètres de modélisation de voies de signaux comprend au moins une localisation pour chaque station cellulaire, une hauteur d'antenne de station cellulaire, une direction d'antenne de station cellulaire, une puissance rayonnée efficace de chaque station cellulaire, et une fréquence pour chaque station cellulaire, des données de secteur d'antenne, une modélisation de motif de gain d'antenne, une différence relative de hauteur au-dessus du sol entre le récepteur mobile (102) et un émetteur localisé à chaque station cellulaire, des paramètres de perte de voie urbaine, des paramètres de modèle de terrain de voie incluant des données de terrain et des caractéristiques environnementales associées avec chaque station cellulaire, des caractéristiques structurelles urbaines associées avec chaque station cellulaire, et une largeur de faisceau d'antenne.

3. Procédé selon la revendication 1, dans lequel l'algorithme d'estimation non linéaire est un algorithme Downhill Simplex.

4. Procédé selon la revendication 1, dans lequel l'étape de calcul de localisation comprend en outre l'application d'un algorithme de triangulation à la pluralité de distances entre le récepteur mobile (102) et chacune de la pluralité de stations cellulaires (104).

5. Procédé selon la revendication 1, dans lequel le récepteur mobile (102) est un téléphone cellulaire mobile.

6. Système de détermination d'une localisation d'un récepteur mobile, le système comprenant :
une pluralité de stations cellulaires (104) ;
un récepteur mobile (102) pour déterminer une pluralité de forces de signaux associées avec la pluralité de stations cellulaires, dans lequel la pluralité de forces de signaux sont associées avec un point spécifique dans le temps ;
un serveur de localisation (116) pour calculer une pluralité de paramètres de modélisation de voies de signaux se rapportant au récepteur mobile en combinant la pluralité de forces de signaux avec la pluralité de paramètres de modélisation de voies de signaux pour créer un modèle de perte de voie de propagation, appliquer un algorithme d'estimation non linéaire au modèle de perte de voie de propagation, générer une pluralité de distances, dans lequel chaque distance est associée avec le récepteur mobile et chacune de la pluralité de stations cellulaires ; et calculer la localisation du récepteur mobile par itération de l'algorithme non linéaire et du calcul de localisation, l'itération effectuée en déplaçant la localisation du récepteur mobile jusqu'à ce que la localisation du récepteur mobile soit trouvée, qui minimise des effets de variances dans la pluralité de distances dérivées du modèle de perte de voie de propagation ; et
un réseau (130) pour des communications entre le récepteur mobile et le serveur de localisation.

7. Système selon la revendication 6, dans lequel le récepteur mobile (102) est un téléphone cellulaire mobile.

8. Système selon la revendication 6, dans lequel la première application logicielle combine la pluralité de forces de signaux et la pluralité d'identifiants de stations cellulaires pour créer un rapport de mesure de réseau.

9. Système selon la revendication 6, dans lequel le réseau (130) est un réseau de télécommunications sans fil.
